(19) Europäisches Patentamt
European Patent Office
Office européen des brevets

(11) **EP 3 145 999 B1**

(12) **EUROPEAN PATENT SPECIFICATION**

(45) Date of publication and mention
of the grant of the patent:
**19.07.2023   Bulletin 2023/29**

(21) Application number: **15725860.9**

(22) Date of filing: **21.05.2015**

(51) International Patent Classification (IPC):
**C09C 1/36** $^{(2006.01)}$

(52) Cooperative Patent Classification (CPC):
**C09C 1/3661;** C01P 2004/62; C01P 2004/64;
C01P 2006/60

(86) International application number:
**PCT/GB2015/051505**

(87) International publication number:
**WO 2015/177563 (26.11.2015 Gazette 2015/47)**

(54) **COATED TITANIUM DIOXIDE DISPERSIONS**

BESCHICHTETE TITANDIOXID DISPERSIONEN

DISPERSIONS D'OXYDE DE TITANE REVETU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **23.05.2014   GB 201409209**

(43) Date of publication of application:
**29.03.2017   Bulletin 2017/13**

(73) Proprietor: **Venator Materials UK Limited
Wynyard Park
Stockton-on-Tees
Durham TS22 5FD (GB)**

(72) Inventors:
• **EDWARDS, John L
Stockton-on-Tees
Durham DH1 4AP (GB)**

• **GIBBONS, Linda
Kenilworth CV8 2EY (GB)**
• **BURKE, Alison
Darlington
Durham DL3 8SJ (GB)**
• **BROWN, Andrew E
Mordon
Stockton-on-Tees TS21 2 JG (GB)**
• **JONES, Anthony G
Stockton-on-Tees
Durham (GB)**

(74) Representative: **Barker Brettell LLP
100 Hagley Road
Edgbaston
Birmingham B16 8QQ (GB)**

(56) References cited:
**EP-A1- 0 657 385     EP-A2- 0 595 471
GB-A- 2 298 865     GB-A- 2 473 712**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

The present invention relates to a method for producing a titanium dioxide pigment product. In particular, the method involves the production of a titanium dioxide pigment product, comprising pigmentary titanium dioxide particles, that is suitable for use in the production of paints or inks which have good durability. The method of the invention allows such a product to be produced without the need for a drying step. As a result, the method is more energy and cost efficient.

**Background to the Invention**

Titanium dioxide ($TiO_2$) is commonly viewed as being the principal white pigment in commerce. It has an exceptionally high refractive index, negligible colour and is also inert. Titanium dioxide is generally present in the market place in either of two predominant polymorphs, anatase or rutile; for the majority of commercial applications, rutile is the desired form. Titanium dioxide is well known as being useful as an opacifier in paints, paper, plastics, ceramic, inks, etc. Titanium dioxide, as sold commercially, generally has an average particle size of 150 nm to 350 nm.

There are two main processes for making raw pigmentary titanium dioxide: the sulfate process and the chloride process.

The sulfate process is based on the digestion of ilmenite or titania slag in concentrated sulfuric acid. After iron removal as iron sulfate, the solution is heated and diluted with water. The titanium hydrolyzes, forming a titanium oxysulfate precipitate, which is further treated to produce $TiO_2$ pigment.

The chloride process relies on the carbo-chlorination of low-iron, titanium containing ore or intermediate products to form $TiCl_4$, followed by the gas phase oxidation of $TiCl_4$.

Titanium dioxide can be flocculated and/or precipitated out of a titanium dioxide containing dispersion by pH adjustment of the dispersion.

The finishing process for titanium dioxide, as obtained by any known method, may include one or more of: dry milling, wet milling, classification, filtering, washing, drying, steam micronizing and packaging.

In general, in a commercial process the titanium dioxide dispersion will always be milled and micronized to achieve a desired particle size distribution.

Optionally there may be a surface treatment step. The surface treatment step generally includes precipitating alumina, silica, zirconia, and/or other metal oxides, on the surface of the titanium dioxide. The purpose of this coating treatment is to impart photo stability, shelf life, dispersability, and/or flowability. This step generally occurs after the wet milling step and before the drying step.

It is common for the titanium dioxide to be milled, surface treated and then dried. The drying step after the surface treatment is believed to ensure that the coating is sufficiently condensed onto the particles and has the required level of activity.

It is generally preferred in the art that the finishing process involves: milling; followed by the required surface treatment step, e.g. metal oxide coating; followed by filtering and/or washing; followed by drying; and then followed by micronizing, to obtain a final titanium dioxide white pigment product having the desired particle size distribution.

The steps of treating and drying the product can cause particles to aggregate. The subsequent micronizing step ensures that the particles in the dried and treated product are separated, so that the desired particle size distribution is restored.

Conventionally, therefore, the titanium dioxide is always micronized, in order to produce the desired particle size distribution suitable for use as a white pigment in paints, inks or the like where the mechanical energy input during the production of the paint or ink is low.

The particle size distribution in the paint or other pigment-containing product determines the hiding power achieved by the pigment-containing product.

The mean particle size (when determined either using a Brookhaven BI-XDCW X-ray Disc Centrifuge System or an OD method) should lie in the range of from 0.29 to 0.32 microns, with a geometric standard deviation of less than 1.45. As the skilled person will appreciate, the particle size distribution is modeled as a log normal distribution.

The particle size distribution measurement using a Brookhaven BI-XDCW X-ray Disc Centrifuge System (XDC) may be determined as follows: dried $TiO_2$ material (0.92 g) is mixed with 1/16 % sodium silicate solution (16.80 g) and de-ionised water (5.28 g) in a Bosch mill pot to give a dilute suspension of ~4 % solids. The pH is adjusted to between 10 and 10.5 with two drops of sodium hydroxide solution (2 %). Samples are then vigorously milled for 10 minutes using a Bosch high-speed impeller. This method is designed to be representative of the mechanical energy used in the production of most paint and inks.

The particle size distribution measurement using an OD (optical density) method B may be determined as follows: dried $TiO_2$ material (0.92 g) is mixed with 1/16 % sodium silicate solution (16.80 g) and de-ionized water (5.28 g) in a Bosch mill pot to give a dilute suspension of ~4 % solids. The pH is adjusted to between 10 and 10.5 with two drops of sodium hydroxide solution (2%). Samples are then vigorously milled for 10 minutes using a Bosch high-speed impeller. This method is designed to be representative of the mechanical energy used in the production of most paint and inks. The dispersion is then diluted to a concentration such as to avoid multiple scattering. The optical density of this diluted dispersion is then measured, using a UV/Vis spectrometer, at a series of wavelengths. These measurements are compared to the optical densities at these wavelengths predicted for a log normal distribution of spherical particles calculated using Mie theory. The best fit between the experimental and theoretical results give the geometric volume mean particle size (PS (OD) or OD particle size) and the geometric standard deviation (GSD (OD)).

It may also be desired that the particle size distribution does not have a long "tail", in other words that there is not a significant amount of large size particles present. For example, it is generally desired that 90wt% or more of the particles should have a particle size that is less than 0.5 microns. A high concentration of particles above 0.5 microns would be detrimental to the gloss of the paint or ink. The particle size diameter can be determined using X-ray sedimentation. Ideally it is also the case that 99wt% or more of the particles have a particle size diameter (when determined using X-ray sedimentation) that is less than 1.5 microns.

As noted above, the steps of treating and drying the product can cause particles to aggregate, meaning that the fluid energy milling (micronizing) is normally required in a conventional titanium dioxide pigment production route, in order to return the particles to the desired size. Otherwise, when the final product is subsequently dispersed (e.g. by high speed dispersion) in a vehicle, e.g. to form a paint or ink, the resultant product containing particles of titanium dioxide will not have the desired size distribution but instead will have too high a level of oversize particles.

The fluid energy milling is carried out in a fluid-energy mill (or micronizer). Most fluid-energy mills are variations on a basic configuration of a disc-shaped grinding chamber enclosed by two, generally parallel, circular plates defining axial walls, and an annular rim defining a peripheral wall, with the axial length or height of the chamber being substantially less than the diameter. Around the circumference of the mill are located a number of uniformly spaced jets for injecting the grinding fluid, which furnishes additional energy for comminution, along with one or more feed nozzles for feeding the particulate material to be comminuted. The jets are oriented such that the grinding fluid and particulate material are injected tangentially to the circumference of a circle smaller than the chamber circumference. Feed to the grinding chamber can be introduced either through a side inlet that is tangent to the grinding chamber, or at an angle from the top, usually at a 30° angle to the plane of the grinding chamber. Side feed micronizers generally produce the better grinding dispersion, while top feed micronizers can produce higher rates.

Within the grinding chamber, a vortex is formed by the introduction of the grinding fluid such as compressed gas, through the feed inlet or through fluid nozzles positioned in an annular configuration around the periphery of the grinding chamber. The grinding fluid (compressed gas, e.g., air, steam, nitrogen, etc.), fed tangentially into the periphery of the chamber, forms a high-speed vortex as it travels within the grinding chamber. The high-speed vortex sweeps up the particulate material, which results in high speed particle-to-particle collisions as well as collisions with the interior portion of the grinding chamber walls. In the micronizing of titanium dioxide, the grinding fluid is usually superheated steam.

Clearly, heavier particles have longer residence time within the vortex. Lighter particles move with the vortex of gas until the discharge conduit is reached. Typically, fluid-energy mills are capable of producing fine (less than 10 microns diameter) and ultra fine (less than 5 microns diameter) particles. However, during grinding, undesirably large particle size can sometimes still be found to escape into the product.

In general, in the white pigment industry, there is a particular need to reduce the amount of oversized material passing prematurely into the resulting pigment product. Thus, the intensity of grinding during micronization is typically increased as compared to when other products are micronized. This has a consequence of higher costs, in terms of fluid use, energy consumption, and reduced capacity per mill.

Further, with such processes, the amount of oversized material may be reduced, but there may be adverse effects on pigment properties.

It is a particular concern that the conventional pigment finishing process is a highly energy intensive process. The highest energy consuming operations in finishing is generally the fluid energy milling of the dried product using superheated steam.

Once the final titanium dioxide white pigment product having the desired particle size distribution has been obtained, it is normally reslurried.

In general, the commercial product that is provided is a titanium dioxide white pigment product in the form of an aqueous dispersion. This will normally be a relatively concentrated dispersion, and may be referred to as a pigment concentrate.

GB2473712 discloses a process for producing a concentrated aqueous nanotitania sol which includes the steps of providing an acidic nanotitania sol, contacting the acidic nanotitania sol with a dispersant and with an alkalizing agent, and subjecting the nanotitania sol to membrane filtration until the nanotitania sol contains more than 300g $TiO_2$ nano-particles/$dm^3$. The dispersant is selected from least one of a carboxylic acid, a salt of a carboxylic acid, a polycarboxylic acid, a phosphate or a silicate. The alkalising agent may be an alkanolamine or choline hydroxide. The nanotitania sol may further be subjected to a coating with sodium silicate, potassium silicate or sodium aluminate.

GB2298865 discloses a process for preparing a structured composite pigmentary material which comprises forming an aqueous dispersion of uncoated particles of titanium dioxide at a pH value at which the particles have a surface charge and subjecting the dispersion to cross-flow filtration until the dispersion contains more than 50% by weight titanium dioxide. The concentrated dispersion is mixed with a dispersion of chemically distinct particles having a surface charge of opposite sign under conditions which ensure that the sign of the surface charge on either of the particulate materials is not reversed.

EP0595471 discloses a process for coating inorganic particles with dense amorphous silica in which a suspension of inorganic particles is coated by adding an acid to a solution of a silicate During at least a part of the addition the suspension is subjected to the effects of ultrasonic vibrations.

The present invention provides an improved method for obtaining such a pigment concentrate.

**Summary of the Invention**

The present invention provides, in one aspect, a method for preparing a titanium dioxide product comprising the steps of:

- providing a dispersion comprising titanium dioxide particles, wherein the dispersion contains from 50g/l to 600g/l $TiO_2$; and then, in any order,
- applying an inorganic coating which is an inorganic oxide or hydrous oxide of silicon aluminum, titanium, zirconium, magnesium, zinc, cerium, phosphorus, or tin to the titanium dioxide particles, whilst taking one or more step to maintain colloidal stability before and/or during the coating step;
- concentrating the dispersion, by subjecting the dispersion to the effects of cross-flow filtration and continuing the cross-flow filtration process until the dispersion is in a concentrated form that contains 800g/l or more $TiO_2$;
   so as to provide a titanium dioxide product in the form of a concentrated dispersion of coated particles;

wherein the coating is achieved whilst maintaining the colloidal stability of the titanium dioxide particles within the dispersion by control of one or more of the following factors:

(a) reducing the electrolyte concentration in the dispersion before or during the coating step;
(b) reducing the level of soluble salt that is added during the coating step;
(c) adding a steric stabilizer before or during the coating step;
(d) adjusting the pH of the dispersion away the iso-electric point of the titanium dioxide before or during the coating step;
(e) adjusting the iso-electric point of the titanium dioxide away from the pH of the dispersion by the addition of a dispersant before or during the coating step.

The benefit of this method is that there is no drying of the titanium dioxide particles. The particles remain in wet form, i.e. in a dispersion, during all steps of the method.

Avoiding the drying of the particles has the benefit of reducing costs, because the heating associated with the conventional drying process is not required.

In addition, as noted above, the conventional processes that involve treating and drying the product can cause particles to aggregate, meaning that fluid energy milling (micronizing) is normally required in a conventional titanium dioxide pigment production route. Therefore avoiding the drying of the particles has the benefit of avoiding the aggregation occurring in the first place. The coating step that is used in the method of the invention also does not lead to aggregation of the particles, because colloidal stability is maintained as the coating is effected.

Hence the need for an energy-intensive micronizing step is avoided, and therefore the method is more energy and cost efficient.

In the art there was a mindset that in order for the final titanium dioxide product to have sufficient durability to be suitable for use in the production of paints or inks a coating would need to be dried onto the particles. Therefore coating and drying were seen as necessary.

Thus it was conventional that a coating which reduces photocatalytic activity would be applied to the particles whilst in the initial dispersion form, and the particles would then be dried in order to provide an effective surface treatment, by condensing the coating onto the particles, so as to give those particles weatherability. Such surface treatments to reduce the photocatalytic activity of the titanium dioxide (thus extending the lifetime of pigmentary products into which the titanium dioxide has been incorporated when the product is subjected to solar radiation) are well known in the art.

Surprisingly, the surface treatment used in the method of the present invention provides a coating on the titanium dioxide particles that is effective in reducing the photocatalytic activity of the titanium dioxide, thus giving good durability for pigmentary products (e.g. paints or inks) into which the titanium dioxide is incorporated, even though this coating is never dried. The surface treatment is carried out when the titanium dioxide particles are in the form of a dispersion, and there is no requirement for the titanium dioxide particles to be dried at any point after the treatment. Thus there is no drying step between the surface treatment and the obtaining of a pigment concentrate, which is a titanium dioxide product in the form of a concentrated dispersion of coated particles. In other words, the titanium dioxide particles are retained in the form of a dispersion from the initial step of providing a dispersion comprising titanium dioxide particles through to the step of obtaining of a final titanium dioxide product that is suitable for use in paints or inks.

Therefore it is possible to obtain a pigment concentrate that is suitable for use in paints or inks without the need for drying, and without the need for consequent micronizing. Therefore the method is more energy and cost efficient.

The pigment concentrate that is suitable for use in paints or inks as obtained by the method may be readily dispersed in a vehicle to give a pigmentary product (e.g. a paint or ink product) comprising titanium dioxide pigment. The titanium dioxide pigment has a reduced photocatalytic activity, and thus the pigmentary products have good durability. In other words, even when the pigmentary product is subjected to solar radiation, the lifetime of the pigmentary product is good.

In one embodiment, the pigment concentrate as obtained is subsequently dispersed in a vehicle, to provide a pigmentary product, such as a paint or ink product, comprising pigmentary titanium dioxide particles dispersed in said vehicle. The dispersion may be by mechanical or manual stirring, or by high speed dispersion, or by any other suitable means. No particular requirements exist for the dispersion to be achieved; in the methods of the present invention the pigment particles are readily dispersed without the need for any significant force to be applied.

Thus the method of the invention may be used to obtain a pigmentary product, such as a paint or ink product, which has good durability.

**Description of the Drawings**

**Figure 1** is a graph showing the particle size in microns (determined using an optical density method) and the conductivity values in mS/cm, as recorded during a method for the production of rutile titania particles with two coatings of dense silica in accordance with the invention, as described in Example 1;

**Figure 2** is an electron micrograph showing the rutile titania crystals used in Example 1 before the application of the silica coatings;

**Figure 3** is an electron micrograph showing the rutile titania crystals of Example 1 after the application of the silica coatings.

**Detailed Description of the Invention**

In the present method a dispersion comprising titanium dioxide particles is initially provided. In this dispersion there is from 50g/l to 600g/l $TiO_2$, such as from 50g/l to 500g/l $TiO_2$; for example it may be that there is from 100g/l to 600g/l $TiO_2$ or from 100g/l to 550g/l $TiO_2$ or from 150g/l to 550g/l $TiO_2$ or from 150g/l to 500g/l $TiO_2$.

In one embodiment there is from 200g/l to 500g/l $TiO_2$ in the initial dispersion, e.g. from 200g/l to 450g/l $TiO_2$ or from 250g/l to 450g/l $TiO_2$ or from 250g/l to 400g/l $TiO_2$ or from 300g/l to 400g/l $TiO_2$.

Ranges for the concentration of the $TiO_2$ in the initial dispersion are envisaged for all possible combinations of the various lower and upper limits mentioned above.

The dispersion may optionally have been diluted or may have been concentrated to provide a dispersion with said concentration of titanium dioxide particles.

The dispersion comprising titanium dioxide particles may be obtained by any conventional steps, as discussed in more detail below. In general, the obtaining of the initial dispersion of titanium dioxide particles is standard and is not altered by the present invention. As is conventional in the art, the dispersion will be obtained bearing in mind the intended use of the titanium dioxide, e.g. as a pigment in paints or inks, and therefore the relevant characteristics of the particles in terms of size and the like.

The liquid carrier in the dispersion in which the titanium dioxide particles are provided is preferably polar.

In one embodiment, the liquid carrier is aqueous; this may be water or an aqueous solution. However other polar carriers for the particles could also be contemplated, e.g. they may be selected from polar organic solvents or alcohols. The liquid carrier may also be a mixture of two or more polar carriers, e.g., it may be a mixture of water and alcohol.

An inorganic coating which is an inorganic oxide or hydrous oxide of silicon, aluminum, titanium, zirconium, magnesium, zinc, cerium, phosphorus, or tin is applied to the titanium dioxide particles in the method of the present invention. This coating may be applied before the dispersion is concentrated by cross-filtration or after the dispersion is concentrated by cross-filtration.

The titanium dioxide pigment particles are therefore surface treated so as to be coated with inorganic material. The treatment is applied to reduce the photocatalytic activity of the titanium dioxide, thus extending the lifetime of pigmentary products into which the titanium dioxide has been incorporated when the product is subjected to solar radiation. The skilled reader will know that such surface treatments for titanium dioxide particles are known in the art. However, as noted above, such treatments are conventionally viewed as requiring a subsequent drying step to achieve an effective coating. In contrast, in the present invention, the coated particles are not dried after the treatment. It has been determined in the present invention that an effective coating can be achieved without the need for a subsequent drying step when the coating is applied whilst maintaining colloidal stability during the coating step.

The inorganic coating which is an inorganic oxide or hydrous oxide of silicon, aluminum, titanium, zirconium, magnesium, zinc, cerium, phosphorus, or tin is applied by use of a coating agent, to coat said inorganic oxide or hydrous oxide onto the surface of particles. Coating agents suitable for use include inorganic oxides and hydrous oxides. These materials are commonly used to coat an inorganic oxide or hydrous oxide onto the surface of particles. Inorganic oxides and hydrous oxides that may be mentioned for use as the coating agent are one or more oxides and/or hydrous oxides of silicon, aluminum, titanium, zirconium, magnesium, zinc, cerium, phosphorus, or tin.

In some embodiments, the coating agent may be $Al_2O_3$, $SiO_2$, $ZrO_2$, $CeO_2$, $P_2O_5$, sodium silicate, potassium silicate, sodium aluminate, aluminum chloride, aluminum sulphate, or mixtures thereof. Silicic acid may also be mentioned.

The coating may be dense or non dense. For example, a dense or non dense silica coating may be used and/or a dense or non dense alumina coating may be used.

In one embodiment the coating agent comprises silicon dioxide applied in a dense form. In one such embodiment, the coating comprises a dense silica coating of the type as described in US 2,885,366.

Only one layer of coating may be applied, or more than one layer of coating may be applied (e.g. two layers or three layers). When more than one layer of coating is applied, each layer may be the same or different.

In one embodiment, only one layer of dense silica coating is added. In another embodiment, two layers of dense silica coating are added. In another embodiment, one layer of dense silica coating and one layer of dense alumina coating are added.

In one embodiment there are two or more coating materials used to coat the particles. These coatings may be applied either simultaneously in a single operation or in succession. If applied simultaneously, different coating materials may be used in combination to produce a single layer. If applied successively, different coating materials may be used separately to produce two or more layers, each layer having a different composition.

For example, in one embodiment, the particles are coated with silica, such as dense silica, to produce a layer, and also with zirconia to produce another layer.

The amount of coating that is coated onto the surface of the titanium dioxide may range from about 0.1% by weight to about 20% by weight of the coating (e.g. the inorganic oxide and/or hydrous oxide) relative to the total weight of the titanium dioxide. In one embodiment the amount of coating agent is about 0.1 to about 15% or about 0.1 to about 10% by weight, relative to the total weight of the titanium dioxide.

The particles may be, for example, coated with the coating agent at a level of up to about 7% by weight, such as from about 0.1% to about 7% by weight, or such as from about 0.5% to about 7% by weight, or such as from about 0.5% to about 6% by weight, or such as from about 1% to about 6% by weight, relative to the total weight of titanium dioxide. It may be that the particles are coated with the coating agent at a level of from about 0.1% to about 5% by weight, or such as from about 0.5% to about 5% by weight, and in particular from about 1% to about 5% by weight, relative to the total weight of titanium dioxide.

In the present invention, when reference is made to the addition level of coating on the titanium dioxide particles, this is given as a w/w amount, i.e. the total weight amount of coating material that is added with respect to the total weight amount of titanium dioxide particles treated. Thus, for example, when considering a silica coating, it may be stated that "the addition level of the $SiO_2$ was 1.5% w/w on to the $TiO_2$".

The coating material may be used to treat the titanium dioxide particles in the provided dispersion by adding the coating material to the dispersion or by adding the dispersion to the coating material. Preferably, mixing of the coating material and dispersion is carried out using conventional mixing equipment as known in the art.

Mixing may be carried out for any suitable length of time, e.g. 1 minute or more, 2 minutes or more, 3 minutes or more, 4 minutes or more, or 5 minutes or more. It may be that mixing is carried out for no more than 3 hours, e.g. no more than 2 hours, such as 1 hour or less. In one embodiment the mixing is carried out for from 5 minutes to 1 hour, such as from 10 minutes to 45 minutes, e.g. from 20 minutes to 40 minutes.

In one embodiment, a coating may be applied as follows: an aqueous dispersion comprising particles of titanium dioxide is introduced into a tank for stirring. The temperature of the dispersion is then adjusted (e.g. to 75 to 90°C) and its pH is adjusted (e.g. to about 10.5). A coating material is then introduced into the stirred tank in an amount sufficient to produce the desired coating. For example, to produce a 1% by weight dense silica coating, 1% silica (%wt/wt on titanium dioxide) is added to the stirred tank over a 30 minute period and is then mixed for 30 minutes; whilst to produce a 3% by weight dense silica coating, 3% silica (%wt/wt on titanium dioxide) is added in the same manner. In one embodiment, silica may be added to the stirred tank in the form of sodium silicate as coating material. To precipitate the dense silica coating onto the particles, the pH is adjusted, e.g. by adding sulphuric acid to the stirred tank. In one particular embodiment, sulphuric acid is added over a 60 minute period to bring the pH to about 8.

The skilled reader will of course appreciate that this method can readily be modified to add different amounts of coating, as desired. The present invention does not lie in the application of the coating per se; such coatings are already known in the art and can be readily put in to practice.

In the method of the present invention the coating is achieved whilst maintaining the colloidal stability of the titanium dioxide particles within the dispersion. This is a key aspect of the invention. As the skilled reader will appreciate, this can be achieved through control of factors such as electrolyte concentration in the dispersion and the pH of the dispersion.

Steps to maintain the colloidal stability may be taken before the coating process is started and/or steps may be taken during the coating; e.g. between the application of a first coating and a second coating.

The coating is achieved whilst maintaining the colloidal stability of the titanium dioxide particles within the dispersion by control of one or more of the following factors:

(a) reducing the electrolyte concentration in the dispersion before or during the coating step;
(b) reducing the level of soluble salt that is added during the coating step;
(c) adding a steric stabilizer before or during the coating step;
(d) adjusting the pH of the dispersion away the iso-electric point of the titanium dioxide before or during the coating step;
(e) adjusting the iso-electric point of the titanium dioxide away from the pH of the dispersion, by the addition of a dispersant before or during the coating step.

In this regard, colloidal stability requires repulsive forces between colliding particles. However, titanium dioxide particles in water or other solvents naturally attract each other. Electrical charges on the particles result in an electrostatic repulsive force which screens this attraction. Such electrostatic repulsion is therefore desired if there is to be colloidal stability. The strength of this electrostatic repulsion depends on having a high surface charge and a low electrolyte concentration; at high electrolyte concentrations the range of the electrostatic forces is reduced and therefore the screening of attractive forces is less effective. The surface charge on titanium dioxide particles is determined by the adsorption of $H^+/OH^-$ ions; therefore the net surface charge on the particle is affected by the pH of the solution in which the particles are dispersed. At a certain pH (the iso-electric point) the particle will carry no net electrical charge (and there will be no electrostatic repulsive forces); as the pH is increased upwards from this pH the particle will become increasingly negatively charged and the colloidal stability will improve. Similarly, as the pH is decreased, the particle will become increasingly positively charged and the colloidal stability will improve.

### (a) Reducing the electrolyte concentration in the dispersion before or during the coating step

The concentration of electrolyte (salt) in the dispersion impacts on the extent of flocculation that occurs. Therefore in one preferred embodiment the electrolyte concentration in the dispersion is reduced before or during the coating step. Preferably it is reduced before the coating step is begun. If there is application of more than one coating layer, then optionally it may be reduced between the applications of these coating layers.

The electrolyte concentration in the dispersion is suitably reduced by the use of diafiltration. This ultrafiltration membrane technique is well known in the art. It involves use of micro-molecule permeable filters to removal permeable molecules like salts. The process selectively uses porous membrane filters to separate the components of solutions and suspensions based on their molecular size. Smaller molecules such as salts pass freely through the ultrafiltration membrane, which retains the larger molecules.

Ultrafiltration equipment, such as the Axium 250 L "Ultrafiltration Pilot Plant", may be used to achieve diafiltration. Suitable membranes, such as "Koch SUPER-COR®" tubular membranes with a membrane area of $6.6m^2$, are selected to ensure that the relevant electrolytes are removed.

In one embodiment, the dispersion conductivity is reduced by 0.5mS/cm or more, such as 1 mS/cm or more, or 1.5mS/cm or more, or 2mS/cm or more, such as 2.5mS/cm or more. In other words, this is the decrease in the dispersion conductivity that occurs as a result of the treatment, e.g. diafiltration. It is therefore calculated by subtracting the dispersion conductivity post-treatment from the dispersion conductivity pre-treatment.

In one embodiment, the dispersion conductivity is reduced so that the dispersion conductivity post-treatment (e.g. after diafiltration) is 5mS/cm or less, such as 4.5 mS/cm or less, or 4mS/cm or less, or 3.5 mS/cm or less. It may be that the dispersion conductivity is reduced to be at a level of 3mS/cm or less, such as 2.5 mS/cm or less, or 2mS/cm or less, or 1.5mS/cm or less, e.g. it may be from 0.1 to 2mS/cm or from 0.5 to 1.5mS/cm.

In one embodiment, the dispersion conductivity is reduced so that the dispersion conductivity before the coating is applied is 5mS/cm or less, such as 4.5 mS/cm or less, or 4mS/cm or less, or 3.5 mS/cm or less, or 3mS/cm or less, such as 2.5 mS/cm or less, or 2mS/cm or less, or 1.5mS/cm or less. It may optionally be that whilst the coating is applied the dispersion conductivity is maintained at a level of 5mS/cm or less.

In one embodiment, the dispersion conductivity is reduced so that the dispersion conductivity before the coating is applied is from 0.05 to 3mS/cm, e.g. from 0.1 to 2.5mS/cm, such as from 0.15 to 2mS/cm, or from 0.2 to 1.5mS/cm, or from 0.25 to 1mS/cm.

Even allowing for increases in levels of electrolyte during a single coating of inorganic material, the use of these levels will ensure that the dispersion conductivity is maintained at a level that sufficiently retains colloidal stability for the particles.

As noted above, if more than one coating of inorganic material is applied, it may be desirable to reduce the dispersion conductivity between the applications of these coating layers. In other words, in one embodiment there is a reduction in the dispersion conductivity before each coating layer is applied. Each reduction may be down to the levels noted above. However, each reduction does not need to be the same; it is possible that different levels of dispersion conductivity will be reached before the start of each coating application.

As the skilled reader will appreciate, the conductivity of a solution is measured by determining the resistance of the solution between two electrodes. This is measured using a conductivity meter at room temperature and pressure. A wide range of such instruments are commercially available.

**(b) Reducing the level of soluble salt that is added during the coating step**

The concentration of electrolyte (salt) in the dispersion impacts on the extent of flocculation that occurs. One source of salt can be from the coating agent itself.

The level of soluble salt added during coating can be reduced by adding a low level of coating agent that is in the form of a salt.

Therefore the level of soluble salts added during the coating step can be reduced by the use of a coating agent that is in the form of a salt (for example sodium silicate) but utilising a relatively low level of coating agent.

Therefore in one embodiment the particles are coated with the coating agent at a level of up to about 4% by weight, such as from about 0.1% to about 4% by weight, or such as from about 0.5% to about 3% by weight, or such as from about 0.5% to about 2.5% by weight, relative to the total weight of titanium dioxide.

In one preferred embodiment the particles are coated with the coating agent at a level of from about 0.5% to about 2% by weight, e.g. from about 1 to about 1.5%, relative to the total weight of titanium dioxide

Alternatively or additionally, the level of soluble salts added during the coating step can be reduced by the selection of a coating agent that is not in the form of a salt.

For example "active silica" (silicic acid) may be selected as the coating agent. "Active silica" can be generated by passing sodium silicate down an ion exchange column. This is known in the art and is described in, for example, Example 21 of US 2 885 366.

**(c) Adding a steric stabilizer before or during the coating step**

The extent of flocculation can be reduced, and thus colloidal stability can be maintained, by adding a steric stabilizer. The stabilizer can be added before the coating step is started or whilst the coating step is taking place.

Example of steric stabilizers that can be added include, but are not limited to, polyvinylpyrrolidone, polyethylene oxide, polyacrylic acid and copolymers thereof with polyacrylates and methacrylates, polymethacrylic acid and copolymers thereof with polyacrylates and methacrylates, and polyvinyl alcohol, and combinations thereof.

The steric stabilizer may be added in any suitable amount. For example, steric stabilizer may be used at a level of 0.2mg per $m^2$ of particle surface or more, e.g. 0.5mg per $m^2$ of particle surface or more, and preferably 1mg per $m^2$ of particle surface or more, such as 1.5mg per $m^2$ of particle surface or more. In one embodiment, steric stabilizer may be used at a level of 10g per $m^2$ of particle surface or less, e.g. 7mg per $m^2$ of particle surface or less, and preferably 5mg per $m^2$ of particle surface or less, such as 4.5mg per $m^2$ of particle surface or less.

It may be that steric stabilizer is used at a level of from 0.2 to 10 mg per $m^2$ of particle surface, such as from 0.5 to 7mg per $m^2$ of particle surface and preferably from 1 to 5 mg per $m^2$ of particle surface.

**(d) Adjusting the pH of the dispersion away the iso-electric point of the titanium dioxide before or during the coating step**

As noted above, at the iso-electric point (about pH 5-6) the titania particles will carry no net electrical charge and there will be no electrostatic repulsive forces; however as the pH moves away this iso-electric pH the particle will become increasingly charged and the colloidal stability will improve.

Therefore by adjustment of the pH, either by addition of acidic material or addition of basic material, the pH can be moved away from the iso-electric point, either before the coating step is started or during the coating step. This will reduce flocculation.

In one embodiment, basic material is added to raise the pH and move it away from the iso-electric point. Bases such as KOH, NaOH, and $NH_4OH$, and neutralizing amines such as DMAMP, AMP (amino-2-methyl propanol), MEA (monoethanol amine), and DEAE (diethyl amino ethanol) may suitably be used to raise the pH. However, the skilled reader will appreciate that a variety of materials having basic characteristics may suitable be used and the invention is not limited by the choice of basic material.

It may be, for example, that the pH is raised to 9 or more, such as 9.5 or more, especially 10 or more. The pH may, for example, be raised to be in the range of from 9.5 to 11 or from 10 to 10.5.

Alternatively, acidic material is added to lower the pH and move it away from the iso-electric point. Acids such as HCl or $HNO_3$ may suitably be used to lower the pH. However, the skilled reader will appreciate that a variety of materials having acidic characteristics may suitable be used and the invention is not limited by the choice of acidic material.

It may be, for example, that the pH is lowered to 4 or less, such as 3.5 or less, especially 3 or less. The pH may, for example, be lowered to be in the range of from 2 to 3.5 or from 1.5 to 3.

**(e) adjusting the iso-electric point of the titanium dioxide away from the pH of the dispersion, by the addition of a dispersant before or during the coating step**

As noted above, at the iso-electric point (about pH 5-6) the titania particles will carry no net electrical charge and there will be no electrostatic repulsive forces; however as the pH moves away this iso-clectric pH the particle will become increasingly charged and the colloidal stability will improve.

Therefore by adjustment of the iso-electric point, the iso-electric point can be moved away from the pH of the dispersion, either before the coating step is started or during the coating step. This will reduce flocculation.

The adjustment of iso-electric points by the use of dispersants is known in the art. One suitable dispersant is an $\alpha$-hydroxy carboxylic acid, such as citric acid.

In one preferred embodiment, the coating is achieved whilst maintaining the colloidal stability of the titanium dioxide particles within the dispersion by control of one or more (such as two or more, or all three) of the following factors:

(a) reducing the electrolyte concentration in the dispersion before or during the coating step;
(b) reducing the level of soluble salt that is added during the coating step;
(c) adding a steric stabilizer before or during the coating step.

Optionally factor (d) and/or factor (e) may also be used.

In one preferred embodiment the coating is achieved whilst maintaining the colloidal stability of the titanium dioxide particles within the dispersion by control of the following factor:

(a) reducing the electrolyte concentration in the dispersion before or during the coating step.

Optionally one or more of factors (b) to (e) may also be used. For example, factor (b) and/or factor (c) may also be used.

In the present method the dispersion is concentrated by cross-filtration. This may be carried out before the coating is applied or after the coating is applied. In one embodiment a concentration step could be carried out before the coating is applied and a concentration step could be carried out after the coating is applied.

As the skilled reader will appreciate, a "cross-flow" filtration process is a process in which the dispersion passes in a direction parallel to the membrane, while the pressure gradient is across the membrane. The solids move through the system whilst remaining above the membrane and are collected as a retentate, whilst the liquid passes through the membrane and is collected as a permeate.

Examples of "cross-flow" filtration processes include tangential flow filtration, as well as forms of cross flow filtration where additional shear is introduced by causing vigorously vibrations in a direction tangent to the faces of the membranes.

The present invention may, for example, use a tangential flow filtration process when carrying out the cross-flow filtration to concentrate the dispersion.

After the concentration step, the concentrated dispersion will have a concentration of titanium dioxide particles of 800 g/l or more, such as 900 g/l or more, 1000 g/l or more, 1100 g/l or more, 1200 g/l or more, 1300 g/l or more, 1400 g/l or more or 1500 g/l or more.

In this regard, after the concentration step, the concentrated dispersion may suitably have a concentration of titanium dioxide particles of from 800 g/l to 3000g/l, e.g. from 800 g/l to 2700g/l, or from 800 g/l to 2500g/l, or from 800g/l to 2000g/l. Preferably the concentrated dispersion has a concentration of titanium dioxide particles of from 1000 g/l to 3000g/l, e.g. from 1000 g/l to 2700g/l, or from 1000 g/l to 2500g/l, or from 1000g/l to 2000g/l. More preferably the concentrated dispersion has a concentration of titanium dioxide particles of from 1200 g/l to 3000g/l, e.g. from 1200 g/l to 2700g/l, or from 1200 g/l to 2500g/l, or from 1200g/l to 2000g/l. It may be that the concentrated dispersion has a concentration of titanium dioxide particles of from 1400 g/l to 3000g/l, e.g. from 1400 g/l to 2700g/l, or from 1400 g/l to 2500g/l, or from 1400g/l to 2000g/l.

In one embodiment, the concentrated dispersion has a concentration of titanium dioxide particles of from 1500 g/l to 2000g/l.

In one embodiment the coating step is carried out before the concentration step.

As noted above, the dispersion as initially provided in the method of the invention may be conventional.

The titanium dioxide pigment particles provided in the dispersion may be anatase, rutile or amorphous or a mixture thereof.

In one embodiment, the titanium dioxide is substantially in a rutile crystal habit. Thus, according to one embodiment, greater than 90% by weight of the titanium dioxide, preferably greater than 95% by weight of the titanium dioxide, and even more preferably greater than 99% by weight of the titanium dioxide, based on the total weight of the particulate material, is in the rutile crystal habit. The percent of titanium dioxide in the rutile crystal habit may be determined by any known method, for example, by measuring X-ray diffraction patterns. However, in some embodiments the particulate material may comprise titanium dioxide in an anatase crystal form.

As the skilled reader is aware, crystal size is distinct from particle size. Crystal size relates to the size of the fundamental crystals which make up the particulate material. These crystals may then aggregate to some degree to form larger particles. For example, conventional titanium dioxide in a rutile crystal form has a crystal size of about 0.17 $\mu$m - 0.29 $\mu$m and a particle size of about 0.25 $\mu$m - 0.40 $\mu$m while conventional titanium dioxide in an anatase crystal form has a crystal size of about 0.10 $\mu$m - 0.25 $\mu$m and a particle size of about 0.20 $\mu$m - 0.40 $\mu$m. The particle size is thus affected by factors such as the crystal size, as well as milling techniques used during production, such as dry, wet or incorporative milling, and subsequent treatments that cause aggregation of crystals.

The particle size of the titanium dioxide may therefore be greater than or about equal to the crystal size.

The crystal size and particle size of the titanium dioxide may be determined by methods well known to those skilled in the art. For example, the crystal size may be determined by transmission electron microscopy on a rubbed out sample with image analysis of the resulting photograph. The results of the crystal size may further be validated by reference using latex NANOSPHERE™ Size Standards (available from Thermo Scientific). A method which may be used for determining the particle size of the titanium dioxide is X-ray sedimentation.

The liquid carrier in the dispersion in which the titanium dioxide particles are provided is preferably polar.

In one embodiment, the liquid carrier is aqueous; this may be water or an aqueous solution. However other polar carriers for the particles could also be contemplated, e.g. they may be selected from polar organic solvents or alcohols. The liquid carrier may also be a mixture of two or more polar carriers, e.g., it may be a mixture of water and alcohol.

To produce the titanium dioxide, natural ores (such as ilmenite and mineral rutile), enriched ores (such as titanium slag and beneficiated ilmenite), or mixtures thereof may be used as the starting raw material. These ores may be processed by any suitable means, such as the sulphate process or the chloride process, to produce the titanium dioxide crystals of the required purity and size. However, it will be appreciated that the titanium dioxide as provided in dispersion form in the method of the invention can, ultimately, be obtained by any suitable technique and the invention is not limited to any method of manufacture.

As noted above, the particle size and the crystal size are not the same. As is conventional in the art, the titanium dioxide may be milled to ensure that a desired particle size distribution is obtained.

Thus the titanium dioxide in dispersion form, as provided in the method of the invention, may have been milled to ensure that a desired particle size distribution was obtained in that titanium dioxide dispersion.

In this regard, it may be that the titanium dioxide particles were dry-milled before being dispersed into dispersion form. Alternatively or additionally the titanium dioxide particles as in dispersion form may have been milled in the wet state, for example in a fine media mill. In either case, the intention is that the dispersion comprising titanium dioxide particles as provided in the method of the present invention has a particle size distribution that is desirable for the intended end use.

It may be that the dispersion comprising titanium dioxide particles as provided in the method of the present invention contains titanium dioxide particles meeting one or more of the following size criteria:

a) the mean particle size (when determined using a Brookhaven BI-XDCW X-ray Disc Centrifuge System) is from 0.29 to 0.32 microns, with a geometric standard deviation of less than 1.45.
b) 90wt% or more of the particles have a particle size (diameter) that is less than 0.5 microns.
c) 99wt% or more of the particles have a particle size (diameter) that is less than 1.5 microns.

Preferably the dispersion comprising titanium dioxide particles as provided in the method of the present invention contains titanium dioxide particles meeting two or more of those size criteria; most preferably it contains titanium dioxide particles meeting all of those size criteria.

As discussed above, a benefit of the present invention is that there is no drying step which might cause aggregation of the titanium dioxide particles. Thus the desired particle size characteristics are retained. Thus the final titanium dioxide product can be used to provide a pigmentary product, such as a paint or ink product, that has suitable characteristics, e.g. good hiding power and gloss properties.

The method of the present invention does not involve a step of drying the dispersion at any stage.

Therefore in one embodiment all steps of the method are carried out at or near to room temperature. For example, all steps of the method may be carried out at a temperature of from 10 to 30 degrees C, such as from 15 to 25 degrees C, e.g. from 18 to 23 degrees C.

The titanium dioxide product in the form of a concentrated dispersion of coated particles (pigment concentrate) may be used as titanium dioxide pigment concentrate normally would be used.

In one embodiment, the concentrated dispersion of coated particles is packaged in a container for storage. This step may be carried out directly after the concentration step; no drying step is required.

The invention therefore provides a packaged product comprising a concentrated dispersion of coated titanium dioxide particles contained within a packaging container.

Clearly the packaging container should be suitable for containing a dispersion. Preferably it is watertight.

The invention also provides a method for preparing a packaged product comprising a concentrated dispersion of coated titanium dioxide particles contained within a packaging container, the method comprising:

- carrying out the method of the first aspect (including any one or more of the optional steps described above); and then
- placing the concentrated dispersion of coated titanium dioxide particles within a packaging container.

In another embodiment, the concentrated dispersion of coated particles is dispersed within a vehicle to obtain a desired pigmentary product. This step may be carried out directly after the concentration step; no drying step is required.

The vehicle may be any component or combination of components within which the particulate material can be dispersed, and includes, but is not limited to, a resin, carrier, binder, or a mixture thereof.

The invention therefore provides a pigment product comprising the coated titanium dioxide particulate material dispersed in a vehicle.

The invention also provides a method for preparing a pigment product comprising coated titanium dioxide particulate material dispersed in a vehicle, the method comprising:

- carrying out the method of the first aspect (including any one or more of the optional steps described above); and
- dispersing the concentrated dispersion of coated particles within a vehicle.

The titanium dioxide particulate material may, for example, be present in the pigment product at a concentration from about 1% by volume to about 40% by volume (such as from 2% to 35% or from 5% to 30%), based on the total volume of pigment product.

In one embodiment, the vehicle is a synthetic or natural resin. The resin may be, but is not limited to, a polyolefin resin, polyvinyl chloride resin, ABS resin, polystyrene resin, methacrylic resin, polycarbonate resin, polyethylene terephthalate resin, polyamide resin, alkyd resin, acrylic resin, polyurethane resin, polyester resin, melamine resin, fluoropolymer or epoxy resin.

In another embodiment, the vehicle is a carrier. The carrier may be, but is not limited to, an aqueous solvent. For example, the carrier may be water or may consist essentially of water.

The carrier may, however, optionally comprise a non-aqueous solvent, for example, it may be or it may comprise an organic solvent, such as a petroleum distillate, alcohol, ketone, ester, glycol ether and the like.

In yet another embodiment, the vehicle is a binder. The binder may be a metal silicate binder, for example an aluminosilicate binder. The binder may also be a polymeric binder, for example, an acrylic polymer or copolymer binder.

The pigment product may optionally include one or more customary additives. Additives suitable for use include, but are not limited to, thickeners, stabilizers, emulsifiers, texturizers, adhesion promoters, UV stabilizers, de-glossing agents, dispersants, antifoaming agents, wetting agents, coalescing agents, spacer particles and biocides/fungicides.

The pigment product containing the particulate material may be used in any type of application and may be applied to any one or more surfaces of a material or substrate.

For instance, the pigment product may be, or may be used in, a paint, a varnish, an ink, a plastic, a coating, a rubber, or the like.

Furthermore, material substrates and their surfaces to which the pigment products may be applied (by any known means) are essentially unlimited; these include, but are not limited to, a building surface, an automobile, a water tower, a portable container, a road surface, a textile, an aircraft, a boat, a ship, other types of water craft, a window profile, siding, a sign, furniture, fencing, decking, and railings.

The pigment product may also be used as a stand alone composition from which an article can be formed.

The invention will now be further described, in a non limiting manner, by reference to the following examples.

**Comparative Example 1**

Rutile titanium dioxide particles were produced by the chloride route. These titanium dioxide particles were subsequently subjected to fine media milling at laboratory scale to achieve a target particle size distribution.

The starting dispersion had a particle size of 0.31 microns and a geometric standard deviation of 1.42. The $TiO_2$ concentration of the starting material was 390g/l.

The dispersion was then concentrated by lab scale cross flow filtration using a Ultrafiltration Hollow Fiber Cartridge (UFP-500-E-4MA GE Healthcare).

The pH, $TiO_2$ concentration and particle size distribution were measured. The latter was determined using an OD (optical density) method as described above.

The dispersion had the following properties following concentration:

|  | pH | PS (OD) microns | GSD (OD) | $TiO_2$ concentration g/l |
|---|---|---|---|---|
| Comparative Example 1 | 9.5 | 0.3 | 1.42 | 1300 |

**Comparative Example 2**

Rutile titanium dioxide particles were produced by the chloride route. These titanium dioxide particles were subsequently subjected to fine media milling at laboratory scale to achieve a target particle size distribution.

The starting dispersion had a particle size of 0.31 microns and a geometric standard deviation of 1.42. The $TiO_2$ concentration of the starting material was 350 g/l.

A 3% silica coating (w/w addition level $SiO_2$ on the $TiO_2$ particles) was applied to these particles using the method described in Appendix 1. The conductivity at the end of coating step was measured at 8.4mS/cm.

The dispersion was then concentrated by lab scale cross flow filtration using a Ultrafiltration Hollow Fiber Cartridge (UFP-500-E-4MA GE Healthcare).

The pH, $TiO_2$ concentration and particle size distribution were measured. The latter was determined using an OD (optical density) method as described above.

The dispersion had the following properties following concentration:

|  | pH | PS (OD) microns | GSD (OD) | $TiO_2$ concentration g/l |
|---|---|---|---|---|
| Comparative Example 2 | 10.0 | 0.48 | 1.67 | 900 |

It can be seen that a problem with Comparative Example 2 was the increase in the particle size after coating and concentrating. This is believed to be due to flocculation.

**Example 1**

Rutile titanium dioxide particles were produced by the chloride route. These titanium dioxide particles were subsequently subjected to fine media milling at plant scale to achieve a target particle size distribution.

The starting dispersion had a particle size of 0.31 microns and a geometric standard deviation of 1.42 determined using an OD (optical density) method as described above.

A dispersion of this fine media milled reactor discharge (taken from a production stream) was used as the starting material for this example.

The $TiO_2$ concentration of the starting material was 350g/l.

The pH of this coating feed material was then increased to 10 by adding NaOH.

The conductivity of the pH-adjusted material was 3.97mS/cm. This was then reduced to 0.93mS/cm using lab scale cross flow diafiltration, so as to maintain colloidal stability. A 1.5% dense silica coating (w/w addition level $SiO_2$ on the $TiO_2$ particles) was then applied by the method of Appendix 1.

After the coating the conductivity had increased to 4.8mS/cm. The conductivity was then reduced, using cross flow diafiltration, to 0.5mS/cm, so as to maintain colloidal stability. A second 1.5% silica coating (w/w addition level $SiO_2$

on the $TiO_2$ particles) was then applied by the method of Appendix 1.

The particle size distribution was measured before each coating and at various times after each coating, using an OD (optical density) method as described above. The conductivity at each of these times was also measured.

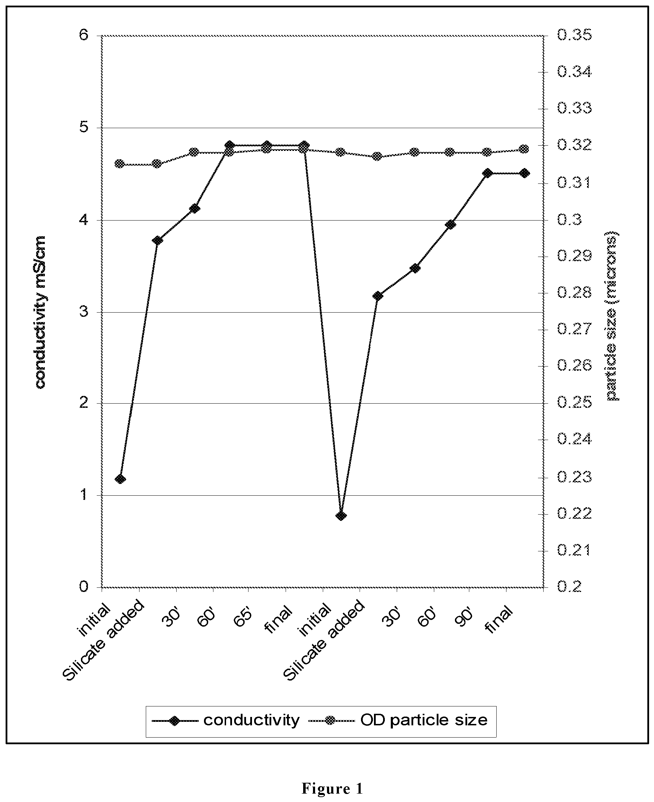

The particle size and conductivities recorded for the coating are shown in **Figure 1.**

It can be seen the increase in particle size during coating, as seen in Comparative Example 2, was avoided. Thus by maintaining colloidal stability, by keeping the conductivity of the dispersion below 5 mS/cm, the flocculation problems were addressed.

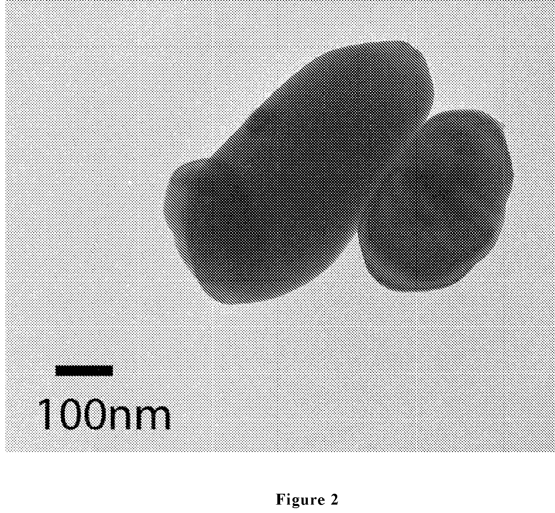

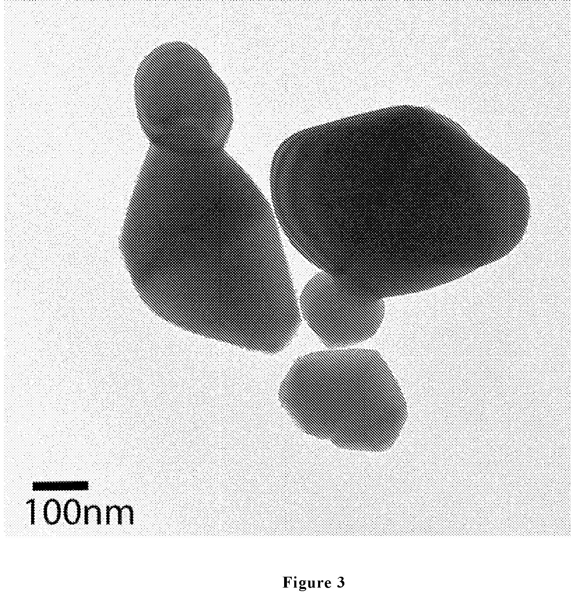

Electron micrographs show $TiO_2$ crystals before **(Figure 2)** and after **(Figure 3)** the application of the silica coating.

The dispersion, containing coated particles, was then washed to a conductivity of 1 mS/cm, and then concentrated to 1300 g/l using cross flow filtration.

The pH, $TiO_2$ concentration and particle size distribution were measured. The latter was determined using an OD (optical density) method as described above.

The dispersion had the following properties following concentration:

|  | pH | PS (OD) microns | GSD (OD) | $TiO_2$ concentration g/l |
|---|---|---|---|---|
| Example 1 | 9.6 | 0.32 | 1.46 | 1300 |

The particles remained in wet form, i.e. in dispersion, during all steps of the example.

It can therefore be appreciated that by maintaining colloidal stability when coating, in this case by ensuring the conductivity of the dispersion is kept below 5mS/cm during the coating process, a silica coating can be applied without causing any significant increase in particle size. The particles can then be successfully concentrated to form a concentrated dispersion of coated particles (a pigment concentrate) which was suitable for direct use in end applications.

**Example 2**

The starting material for this example was the same as that described in Example 1. The $TiO_2$ concentration of the starting material was 390g/l.

The dispersion was washed by dilution on the Axium 250 L "Ultrafiltration Pilot Plant" using "Koch SUPER-COR" tubular membranes with a membrane area of $6.6m^2$. This washing reduced the dispersion conductivity from 3.5mS/cm to 1mS/cm, so as to maintain colloidal stability.

The $TiO_2$ concentration within the washed dispersion was then adjusted to 350g/l by dilution.

The particles were then coated. In this regard, the pH of the dispersion was adjusted to 10 and its temperature was raised to 90°C. Sodium silicate was added to the dispersion over 45 minutes and allowed to mix for 30 minutes. The addition level of the $SiO_2$ was 1.5% w/w on to the $TiO_2$. The pH of the dispersion was reduced from 10 to 8 over a period of 90 minutes by the addition of sulphuric acid. The dispersion was then cooled to room temperature.

Following coating the dispersion was washed to give a conductivity of 1mS/cm.

The dispersion was then concentrated to 1000g/l using the "Koch SUPER-COR" membrane.

Additional concentration step: A portion of this concentrate was further concentrated to 1800g/l using the "Koch ABCOR-FEG" tubular membranes with a membrane area of $1.4m^2$.

The particle size distribution was measured, using both a Brookhaven BI-XDCW X-ray Disc Centrifuge System (XDC) method and an OD (optical density) method as described above.

The dispersion had the following properties following concentration (for both concentrates):

|  | PS (XDC) microns | GSD (XDC) | PS (OD) microns | GSD (OD) |
|---|---|---|---|---|
|  |  |  |  | 20 |
| Example 2 | 0.31 | 1.4 | 0.31 | 1.47 |

The particles remained in wet form, i.e. in dispersion, during all steps of the example.

It can therefore be appreciated that by maintaining colloidal stability when coating, in this case by ensuring the conductivity of the dispersion is kept below 5mS/cm during the coating process, a silica coating can be applied without causing any increase in particle size. The particles can then be successfully concentrated to form a concentrated dispersion of coated particles (a pigment concentrate) which was suitable for direct use in end applications.

**Comparative Example 3**

The starting material for this example was the same as that described in Example 1. The $TiO_2$ concentration of the starting material was 390g/l.

The dispersion was washed by dilution on the Axium 250 L "Ultrafiltration Pilot Plant" using "Koch SUPER-COR" tubular membranes with a membrane area of 6.6m². This washing reduced the dispersion conductivity from 3.5mS/cm to 1mS/cm, so as to maintain colloidal stability.

The TiO2 concentration within the washed dispersion was then adjusted to 350g/l by dilution of the dispersion. The particles were then coated. In this regard, the pH of the dispersion was adjusted to 10 and its temperature was raised to 90°C. Sodium silicate was added to the dispersion over 45 minutes and allowed to mix for 30 minutes. The addition level of the $SiO_2$ was 1.5% w/w on to the $TiO_2$. The pH of the dispersion was reduced from 10 to 8 over a period of 90 minutes by the addition of sulphuric acid. The dispersion was then cooled to room temperature.

Following coating the dispersion was washed to give a conductivity of 1mS/cm.

The dispersion was then concentrated to 1000g/l using the "Koch SUPER-COR" membrane.

In other words, the same method as Example 2 was carried out to obtain a dispersion of coated particles where the dispersion was concentrated to 1000g/l.

This concentrated dispersion was then spray dried and was then subjected to a double fluid energy mill (FEM) micronization treatment.

The particle size distribution was measured, using both a Brookhaven BI-XDCW X-ray Disc Centrifuge System (XDC) method and an OD (optical density) method as described above.

The dispersion had the following properties following the spray drying and micronization:

| | PS (XDC) microns | GSD (XDC) | PS (OD) microns | GSD (OD) |
|---|---|---|---|---|
| Comparative example | 0.33 | 1.35 | 0.33 | 1.44 |

It can therefore be seen that the additional steps of spray drying and micronization, which are conventional in current processes, are not required. Surprisingly, the method of the present invention gives desired particle size properties for the coated particles without needing to dry and micronize the particles.

Therefore the method of the invention permits a concentrate of coated particles to be obtained that can be used directly in end applications, without a drying step.

**Example 3: Application Testing**

The concentrates from Example 1 and Example 2 and Comparative Examples 1 and 2, together with the micronized pigment from Comparative Example 3, were each made into a paint using the modified formulation given in Appendix 2.

The paints were applied to metal plates and subjected to accelerated weathering.

The photocatalytic activity of the pigments was assessed by measuring the Durability Ratio as described in Appendix 3.

The Durability Ratios for the paints were as follows:

| Paint made using particles from: | Durability ratio |
|---|---|
| Comparative Example 1 | 3.06 |
| Comparative Example 2 | 1.47 |
| Example 1 | 0.91 |
| Example 2 | 1.1 |
| Comparative Example 3 | 1.49 |

As a reference point, the Durability Ratio of three commercial durable pigments was measured using the same test. The average (mean) Durability Ratio of these three commercial durable pigments in this test was 0.86.

It can therefore be appreciated that the paints made from concentrates of coated particles according to the invention had Durability Ratios that were commercially acceptable.

The never dried dispersion sample in Example 2, in accordance with the invention, has a lower durability ratio than the dried and micronized sample of Comparative Example 3, indicating that the drying step in pigment preparation is not critical to the ability of silica coating to reduce photocatalytic activity. Therefore the present invention provides a method that allows useful products to be made without any drying steps, thus reducing energy needs and costs and making the process more efficient. The particles can remain in wet form, i.e. in a dispersion, during all steps.

The more heavily coated sample produced in accordance with the invention, as shown in Example 1, had a durability ratio better than Comparative Example 2 (which had a similar coating level to Example 1 but did not control the colloidal stability during coating).

All the coated products have a lower Durability Ratio than the uncoated pigment of Comparative Example 1.

## Appendix 1 - Dense silica coating recipe

| | gpl TiO2 | Temp °C | | |
|---|---|---|---|---|
| | 350 | 90 | | |
| Instruction | | Reagent | Addition time (minutes) | Mixing time minutes |
| | | | | |
| ADD x % $SiO_2$ | | $Na_2SiO_3$ | 45 | 30 |
| | | | | |
| ADD $H_2SO_4$ to pH 7.5 | | $H_2SO_4$ | 60 | 30 |

## Appendix 2 - Formulation for paint makeup

### Millbase

Dispex® N40 solution from BASF (now sold under the name Dispex® AA 4140) is a dispersing agent for water-borne coating systems and is especially suited for the dispersion of inorganic pigments. It is a solution of a sodium salt of an acrylic polymer in water.

2.6 g of this dispersing agent was added to 300g of the pigment dispersion at a concentration of 880g/l. This was stirred for 5 minutes then placed on trundlers. It was left to mix overnight. Then 223 g of this dispersion was added into a suitable stainless steel milling pot.

The dispersion was stirred for 10 minutes on a Dispermat® dissolver (a dissolver for high viscose products that disperses the pigment into the paint formulation, manufactured by VMA-GETZMANN) at 2500 rpm using an impeller.

The following were then added, with continuous stirring at 1200 rpm:-

| | |
|---|---|
| Tektamer 38AD (Acticide BX(N)) (biocide containing Corporation)1,2-dibromo-2,4-dicyanobutane, available from Lanxess | 0.5 g |
| Foamaster NXZ (liquid defoamer for emulsion paints, based on styrene-butadiene, acrylic, polyvinyl chloride and its copolymers, ethylene vinyl acetate, vinylidene chloride and water-soluble alkyds, available from BASF) | 0.5 g |
| Sodium benzoate | 0.5 g |
| Butyl Cellosolve acetate (high boiling, slow evaporating, ester solvent, available from Dow) | 3.5 g |
| Ethylene glycol | 3.5 g |

The speed was then increased to 2Krpm and 1.2 g of Methocel J75C MS thickener (cold water dispersible hydroxypropyl methyl cellulose, available from Dow) was added slowly, over approximately 1 minute.

The speed was then increased to 2.5K for 10 minutes, ensuring that all the Methocel had dissolved.

Then ammonia (28%) was added, to ensure pH >9.

The speed was then increased to 3.5K rpm for 15 minutes (dispersion stage).

**Final Paint**

180g of the millbase was transferred into a 500ml lacquered tin and stirred at 750 rpm using a 50mm impeller.

208g of Primal EP2596 (acrylic emulsion binder designed for highly durable exterior semi-gloss and gloss paints, with thixotropic capability, available from Dow) was added.

This was stirred for 5 minutes then placed on trundlers. It was left to mix overnight.

The thus obtained paints were applied to a metal substrate.

**Appendix 3 - Measurement of the Durability Ratio**

The durability ratio was calculated from mass loss data for the painted metal plates exposed for 3000hrs in an Atlas Ci65a Xenon Arc Weather-Ometer. The mass loss was recorded over 250hrs.

Durability Ratio (DR) is calculated from the mass-loss (ml), expressed in g, for the test pigment. This is determined relative to that for the primary standard (with known DR), using the following equation:

$$DR\ (test) = ml\ (test)\ x\ DR\ (standard)\ /\ ml\ (standard)$$

Thus a higher value for the Durability Ratio means a greater mass loss from the paint and therefore a more photochemically active pigment. Paints or inks which have good durability will have a lower Durability Ratio.

**Claims**

1.  A method for preparing a titanium dioxide product, comprising the steps of:

    - providing a dispersion comprising titanium dioxide particles, wherein the dispersion contains from 50g/l to 600g/l $TiO_2$; and then, in any order,
    - applying an inorganic coating which is an inorganic oxide or hydrous oxide of silicon, aluminum, titanium, zirconium, magnesium, zinc, cerium, phosphorus, or tin to the titanium dioxide particles, whilst maintaining colloidal stability before and/or during the coating step;
    - concentrating the dispersion, by subjecting the dispersion to the effects of cross-flow filtration and continuing the cross-flow filtration process until the dispersion is in a concentrated form that contains 800g/l or more $TiO_2$; so as to provide a titanium dioxide product in the form of a concentrated dispersion of coated particles;

    wherein the coating is achieved whilst maintaining the colloidal stability of the titanium dioxide particles within the dispersion by control of one or more of the following factors:

    (a) reducing the electrolyte concentration in the dispersion before or during the coating step;
    (b) reducing the level of soluble salt that is added during the coating step;
    (c) adding a steric stabilizer before or during the coating step;
    (d) adjusting the pH of the dispersion away the iso-electric point of the titanium dioxide before or during the coating step;
    (e) adjusting the iso-electric point of the titanium dioxide away from the pH of the dispersion, by the addition of a dispersant before or during the coating step.

2.  The method of claim 1, which is a method for preparing a packaged product comprising titanium dioxide particulate material contained within a packaging container,
    wherein the steps as defined in claim 1 are carried out so as to provide a titanium dioxide product in the form of a concentrated dispersion of coated particles; and then the method further comprises:
    placing the concentrated dispersion of coated particles within a packaging container..

3.  The method of claim 1, which is a method for preparing a pigment product comprising titanium dioxide particulate material dispersed in a vehicle,
    wherein the steps as defined in claim 1 are carried out so as to provide a titanium dioxide product in the form of a concentrated dispersion of coated particles; and then the method further comprises:
    dispersing the concentrated dispersion of coated particles within a vehicle to obtain a pigment product.

4. The method of claim 2, wherein the titanium dioxide product is not dried before the step of placing the titanium dioxide product within a packaging container, or the method of claim 3, wherein the titanium dioxide product is not dried before the step of dispersing the titanium dioxide product within a vehicle.

5. The method of any one of claims 1 to 4, wherein the inorganic coating is applied by use of a coating agent that is selected from $Al_2O_3$, $SiO_2$, $ZrO_2$, $CeO_2$, $P_2O_5$, sodium silicate, potassium silicate, sodium aluminate, aluminum chloride, aluminum sulphate, silicic acid, and mixtures thereof.

6. The method of claim 5, wherein the coating agent is selected from $SiO_2$, $P_2O_5$, sodium silicate, potassium silicate, sodium aluminate, silicic acid, and mixtures thereof.

7. The method of any one of claims 1 to 6, wherein the coating is a dense silica coating or comprises a dense silica coating.

8. The method of any one of claims 1 to 7, wherein at least one of factors (a)-(c) is controlled.

9. The method of claim 8, wherein at least factor (a) is controlled.

10. The method of claim 9, wherein the electrolyte concentration in the dispersion is reduced before and/or during the coating step by the use of diafiltration.

11. The method of claim 9 or claim 10, wherein the dispersion conductivity is reduced to be at a level of 5mS/cm or less before the coating step, wherein optionally the dispersion conductivity is maintained at a level of 5mS/cm or less during the coating step.

12. The method of claim 11, wherein the dispersion conductivity is reduced to be at a level of 3mS/cm or less before the coating step, wherein optionally the dispersion conductivity is maintained at a level of 5mS/cm or less during the coating step.

13. The method of any one of claims 9 to 12, wherein the electrolyte concentration in the dispersion is reduced before the coating step is begun.

14. The method of any one of claims 1 to 7, wherein after the concentration step the dispersion contains $TiO_2$ in an amount of from 1000 g/l to 3000g/l.

15. The method of claim 14, wherein after the concentration step the dispersion contains $TiO_2$ in an amount of from 1250 g/l to 2000g/l.


**Patentansprüche**

1. Verfahren zur Herstellung eines Titandioxidprodukts, umfassend die Schritte:

- Bereitstellen einer Dispersion, die Titandioxidpartikel umfasst, wobei die Dispersion von 50 g/l bis 600 g/l $TiO_2$ enthält;

und dann in beliebiger Reihenfolge:

- Aufbringen einer anorganischen Beschichtung, die ein anorganisches Oxid oder wasserhaltiges Oxid von Silicium, Aluminium, Titan, Zirkonium, Magnesium, Zink, Cer, Phosphor oder Zinn ist, auf die Titandioxidpartikel, wobei die kolloidale Stabilität vor und/oder während des Beschichtungsschritts bewahrt wird;
- Konzentrieren der Dispersion durch Unterwerfen der Dispersion an die Wirkungen von Querstromfiltration und Fortsetzen des Querstromfiltrationsverfahrens, bis die Dispersion in einer konzentrierten Form vorliegt, die 800 g/l $TiO_2$ oder mehr enthält;

um ein Titandioxidprodukt in der Form einer konzentrierten Dispersion von beschichteten Partikeln bereitzustellen;

wobei das Beschichten unter Bewahren der kolloidalen Stabilität der Titandioxidpartikel in der Dispersion durch Steuern eines oder mehrerer der folgenden Faktoren durchgeführt wird:

(a) Verringern der Elektrolytkonzentration in der Dispersion vor dem oder während des Beschichtungsschritts;

(b) Verringern des Gehalts an löslichem Salz, das bei dem Beschichtungsschritt zugegeben wird;

(c) Zugeben eines sterischen Stabilisators vor dem oder während des Beschichtungsschritts;

(d) Einstellen des pH-Werts der Dispersion weg von dem isoelektrischen Punkt des Titandioxids vor dem oder während des Beschichtungsschritts;

(e) Einstellen des isoelektrischen Punkts des Titandioxids weg von dem pH-Wert der Dispersion durch Zugabe eines Dispergiermittels vor dem oder während des Beschichtungsschritts.

2. Verfahren gemäß Anspruch 1, das ein Verfahren zur Herstellung eines verpackten Produkts ist, das partikelförmiges Titandioxidmaterial in einem Verpackungsbehälter enthalten umfasst,

wobei die Schritte gemäß Anspruch 1 durchgeführt werden, um ein Titandioxidprodukt in der Form einer konzentrierten Dispersion von beschichteten Partikeln bereitzustellen;

und das Verfahren anschließend ferner umfasst:

Platzieren der konzentrierten Dispersion von beschichteten Partikeln in einem Verpackungsbehälter.

3. Verfahren gemäß Anspruch 1, das ein Verfahren zur Herstellung eines Pigmentprodukts ist, das partikelförmiges Titandioxidmaterial in einem Träger dispergiert umfasst,

wobei die Schritte gemäß Anspruch 1 durchgeführt werden, um ein Titandioxidprodukt in der Form einer konzentrierten Dispersion von beschichteten Partikeln bereitzustellen;

und das Verfahren anschließend ferner umfasst:

Dispergieren der konzentrierten Dispersion von beschichteten Partikeln in einem Träger, um ein Pigmentprodukt zu erhalten.

4. Verfahren gemäß Anspruch 2, wobei das Titandioxidprodukt vor dem Schritt des Platzierens des Titandioxidprodukts in einem Verpackungsbehälter nicht getrocknet wird, oder Verfahren gemäß Anspruch 3, wobei das Titandioxidprodukt vor dem Schritt des Dispergierens des Titandioxidprodukts in einem Träger nicht getrocknet wird.

5. Verfahren gemäß einem der Ansprüche 1 bis 4, wobei die anorganische Beschichtung unter Verwendung eines Beschichtungsmittels aufgebracht wird, das ausgewählt ist aus $Al_2O_3$, $SiO_2$, $ZrO_2$, $CeO_2$, $P_2O_5$, Natriumsilicat, Kaliumsilicat, Natriumaluminat, Aluminiumchlorid, Aluminiumsulfat, Kieselsäure und Gemischen davon.

6. Verfahren gemäß Anspruch 5, wobei das Beschichtungsmittel ausgewählt ist aus $SiO_2$, $P_2O_5$, Natriumsilicat, Kaliumsilicat, Natriumaluminat, Kieselsäure und Gemischen davon.

7. Verfahren gemäß einem der Ansprüche 1 bis 6, wobei die Beschichtung eine dichte Siliciumdioxidbeschichtung ist oder eine dichte Siliciumdioxidbeschichtung umfasst.

8. Verfahren gemäß einem der Ansprüche 1 bis 7, wobei wenigstens einer der Faktoren (a)-(c) gesteuert wird.

9. Verfahren gemäß Anspruch 8, wobei wenigstens der Faktor (a) gesteuert wird.

10. Verfahren gemäß Anspruch 9, wobei die Elektrolytkonzentration in der Dispersion vor dem und/oder während des Beschichtungsschritts durch die Verwendung von Diafiltration verringert wird.

11. Verfahren gemäß Anspruch 9 oder Anspruch 10, wobei die Leitfähigkeit der Dispersion vor dem Beschichtungsschritt auf ein Niveau von 5 mS/cm oder weniger verringert wird, wobei die Leitfähigkeit der Dispersion gegebenenfalls während des Beschichtungsschritts auf einem Niveau von 5 mS/cm oder weniger gehalten wird.

12. Verfahren gemäß Anspruch 11, wobei die Leitfähigkeit der Dispersion vor dem Beschichtungsschritt auf ein Niveau von 3 mS/cm oder weniger verringert wird, wobei die Leitfähigkeit der Dispersion gegebenenfalls während des Beschichtungsschritts auf einem Niveau von 5 mS/cm oder weniger gehalten wird.

**13.** Verfahren gemäß einem der Ansprüche 9 bis 12, wobei die Elektrolytkonzentration in der Dispersion vor dem Beginn des Beschichtungsschritts verringert wird.

**14.** Verfahren gemäß einem der Ansprüche 1 bis 7, wobei die Dispersion nach dem Konzentrierschritt $TiO_2$ in einer Menge von 1000 g/l bis 3000 g/l enthält.

**15.** Verfahren gemäß Anspruch 14, wobei die Dispersion nach dem Konzentrierschritt $TiO_2$ in einer Menge von 1250 g/l bis 2000 g/l enthält.

**Revendications**

**1.** Procédé pour la préparation d'un produit de dioxyde de titane, comprenant les étapes de :

- fourniture d'une dispersion comprenant des particules de dioxyde de titane, la dispersion contenant de 50 g/l à 600 g/l de $TiO_2$ ;

et ensuite, dans un ordre quelconque,

- application d'un revêtement inorganique qui est un oxyde inorganique ou un oxyde hydraté de silicium, aluminium, titane, zirconium, magnésium, zinc, cérium, phosphore ou étain sur les particules de dioxyde de titane, tout en maintenant une stabilité colloïdale avant et/ou pendant l'étape de revêtement ;
- concentration de la dispersion, en soumettant la dispersion aux effets d'une filtration à flux transversal et en continuant le processus de filtration à flux transversal jusqu'à ce que la dispersion soit sous une forme concentrée qui contient 800 g/l ou plus de $TiO_2$ ;

de sorte à fournir un produit de dioxyde de titane sous la forme d'une dispersion concentrée de particules revêtues ;
le revêtement étant réalisé tout en maintenant la stabilité colloïdale des particules de dioxyde de titane dans la dispersion en régulant l'un ou plusieurs des facteurs suivants :

(a) réduction de la concentration en électrolyte dans la dispersion avant ou pendant l'étape de revêtement ;
(b) réduction du taux de sel soluble qui est ajouté pendant l'étape de revêtement ;
(c) ajout d'un stabilisant stérique avant ou pendant l'étape de revêtement ;
(d) ajustement du pH de la dispersion pour qu'il soit éloigné du point isoélectrique du dioxyde de titane avant ou pendant l'étape de revêtement ;
(e) ajustement du point isoélectrique du dioxyde de titane pour qu'il soit éloigné du pH de la dispersion, par l'ajout d'un dispersant avant ou pendant l'étape de revêtement.

**2.** Procédé selon la revendication 1, qui est un procédé pour la préparation d'un produit emballé comprenant un matériau particulaire de dioxyde de titane contenu à l'intérieur d'un récipient d'emballage,

les étapes telles que définies dans la revendication 1 étant mises en oeuvre de sorte à fournir un produit de dioxyde de titane sous la forme d'une dispersion concentrée de particules revêtues ;
et ensuite le procédé comprenant en outre :
le placement de la dispersion concentrée de particules revêtues à l'intérieur d'un récipient d'emballage.

**3.** Procédé selon la revendication 1, qui est un procédé pour la préparation d'un produit de pigment comprenant un matériau particulaire de dioxyde de titane dispersé dans un véhicule,

les étapes telles que définies dans la revendication 1 étant mises en oeuvre de sorte à fournir un produit de dioxyde de titane sous la forme d'une dispersion concentrée de particules revêtues ;
et ensuite le procédé comprenant en outre :
la dispersion de la dispersion concentrée de particules revêtues à l'intérieur d'un véhicule pour obtenir un produit de pigment.

**4.** Procédé selon la revendication 2, le produit de dioxyde de titane n'étant pas séché avant l'étape de placement du produit de dioxyde de titane à l'intérieur d'un récipient d'emballage, ou procédé selon la revendication 3, le produit de dioxyde de titane n'étant pas séché avant l'étape de dispersion du produit de dioxyde de titane à l'intérieur d'un véhicule.

5. Procédé selon l'une quelconque des revendications 1 à 4, le revêtement inorganique étant appliqué en utilisant un agent de revêtement qui est choisi parmi $Al_2O_3$, $SiO_2$, $ZrO_2$, $CeO_2$, $P_2O_5$, un silicate de sodium, un silicate de potassium, un aluminate de sodium, le chlorure d'aluminium, le sulfate d'aluminium, un acide silicique, et des mélanges correspondants.

6. Procédé selon la revendication 5, l'agent de revêtement étant choisi parmi $SiO_2$, $P_2O_5$, un silicate de sodium, un silicate de potassium, un aluminate de sodium, un acide silicique, et des mélanges correspondants.

7. Procédé selon l'une quelconque des revendications 1 à 6, le revêtement étant un revêtement de silice dense ou comprenant un revêtement de silice dense.

8. Procédé selon l'une quelconque des revendications 1 à 7, au moins l'un des facteurs (a) à (c) étant régulé.

9. Procédé selon la revendication 8, au moins le facteur (a) étant régulé.

10. Procédé selon la revendication 9, la concentration en électrolyte dans la dispersion étant réduite avant et/ou pendant l'étape de revêtement par l'utilisation d'une diafiltration.

11. Procédé selon la revendication 9 ou la revendication 10, la conductivité de la dispersion étant réduite pour être à un niveau de 5 mS/cm ou moins avant l'étape de revêtement, éventuellement la conductivité de la dispersion étant maintenue à un niveau de 5 mS/cm ou moins pendant l'étape de revêtement.

12. Procédé selon la revendication 11, la conductivité de la dispersion étant réduite pour être à un niveau de 3 mS/cm ou moins avant l'étape de revêtement, éventuellement la conductivité de la dispersion étant maintenue à un niveau de 5 mS/cm ou moins pendant l'étape de revêtement.

13. Procédé selon l'une quelconque des revendications 9 à 12, la concentration en électrolyte dans la dispersion étant réduite avant que l'étape de revêtement ne soit commencée.

14. Procédé selon l'une quelconque des revendications 1 à 7, après l'étape de concentration, la dispersion contenant $TiO_2$ en une quantité allant de 1 000 à g/l à 3 000 g/l.

15. Procédé selon la revendication 14, après l'étape de concentration, la dispersion contenant $TiO_2$ en une quantité allant de 1 250 à g/l à 2 000 g/l.

Figure 1

**Figure 2**

**Figure 3**

**EP 3 145 999 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 2473712 A
- GB 2298865 A
- EP 0595471 A
- US 2885366 A